**Europäisches Patentamt**

**European Patent Office**

**Office européen des brevets**

(19)

(11) Veröffentlichungsnummer: **0 085 825**

**B1**

(12) **EUROPÄISCHE PATENTSCHRIFT**

(45) Veröffentlichungstag der Patentschrift:
22.07.87

(51) Int. Cl.⁴: **G 02 B 6/36**

(21) Anmeldenummer: **83100052.6**

(22) Anmeldetag: **05.01.83**

(54) Vorrichtung zum lösbaren Verbinden von Lichtwellenleiterfasern.

(30) Priorität: **16.01.82 DE 3201240**

(43) Veröffentlichungstag der Anmeldung:
**17.08.83 Patentblatt 83/33**

(45) Bekanntmachung des Hinweises auf die Patenterteilung:
**22.07.87 Patentblatt 87/30**

(84) Benannte Vertragsstaaten:
**AT BE CH DE FR GB IT LI LU NL SE**

(56) Entgegenhaltungen:
DE-A-2 363 986
DE-A-2 524 644
DE-A-2 527 541
DE-A-2 733 167
DE-A-2 807 860
DE-B-2 518 319

(73) Patentinhaber: **Schiederwerk Günter Schmidt KG Fabrik für Apparate der Fernmelde- und Elektrotechnik, Solgerstrasse 21, D-8500 Nürnberg 81 (DE)**

(72) Erfinder: **Schwenda, Gerhard, Obering., Fliederweg 4, D-8501 Grosshabersdorf (DE)**
Erfinder: **Orendt, Alfred, Königshammer Strasse 31, D-8500 Nürnberg 50 (DE)**

(74) Vertreter: **Kessel, Egbert, Dipl.- Ing., Patentanwälte Dr.jur. Dipl.- Ing. W. Böhme Dipl.- Ing. E. Kessel Dipl.- Ing. V. Böhme Karolinenstrasse 27, D-8500 Nürnberg (DE)**

## Beschreibung

Die Erfindung betrifft eine Vorrichtung zum lösbaren Verbinden von zwei Lichtwellenleiterfasern durch Einlagen der Faserenden in eine V-förmige Rinne eines Verbinderkörpers und anschließendes Verspannen der Faserenden durch wenigstens ein diese in die Rinne drückendes federelastisches Spannelement, wobei die Tiefe der Rinne kleiner als der Durchmesser der Faserenden ist.

Eine Vorrichtung dieser Gattung ist aus der DE-A-2 527 541 bekannt. Bei der bekannten Bauart sind zwei selbständige, baulich voneinander getrennte Halteelemente vorgesehen, von denen jedes ein Faserende aufnimmt. Dabei ist jedes Faserende mit seinem ummantelten Bereich in einer Bohrung des betreffenden Halteelements gelagert, während sein nicht ummantelter Bereich in einer V-förmigen Rinne angeordnet ist; die nicht ummantelten Bereiche beider Faserenden einer Verbindung werden mittels eines einzigen Federelements in die V-förmige Rinne gedrückt. Dieser bekannten Bauart haften jedoch etliche z.T. schwerwiegende Nachteile an.

Zunächst müssen beim Herstellen der Verbindung infolge der Zweiteiligkeit des Verbinders die beiden Halteelemente relativ zueinander bewegt werden, wobei es zu unerwünschten Lageveränderungen des in ihnen gehaltenen Faserendes kommen kann. Weiter bedingen die Bohrungen eine Festlegung auf Fasern eines ganz bestimmten Durchmessers, was eine erhebliche Beschränkung des Einsatzbereichs bedeutet. Ferner ist die federelastische Beaufschlagung der Faserenden aufgrund der Verwendung nur eines Federelements für beide Faserenden einer Verbindung und der damit verbundenen unterschiedlichen Länge der Federwege nicht gleichmäßig, was zu einem Achsversatz führt. Außerdem besteht beim Einlegen der Faserenden in die Halteelemente bzw. in die V-förmige Rinne keine Kontrollmöglichkeit des Einschubmaßes, so daß es vorkommen kann, daß die Faserenden sich überlappen oder aber ihre Stirnflächen voneinander entfernt sind, was noch dadurch begünstigt wird, daß beim Abbiegen bzw. Herunterdrücken der Faserenden mittels der Federelemente eine auswärte gerichtete Bewegung der Faserstirnflächen stattfindet. Darüber hinaus wird beim Auftreten unterschiedlicher Faserdurchmesser, die durchaus im Toleranzbereich liegen können, aufgrund der Tatsache, daß beide Faserenden von einem einzigen Federelement beaufschlagt werden, ein Faserende lose sein, was zu einem unerwünschten Lösen der Verbindung führt. Schließlich besteht keine Möglichkeit, die Ordnungsgemäßheit der Verbindung visuell nachzuprüfen.

Der Erfindung liegt die Aufgabe zugrunde, mit technisch einfachen und kostengünstigen Mitteln eine ordnungsgemäße Verbindung der Faserenden zu gewährleisten und die Ordnungsgemäßheit jederzeit, d.h. also während und vor allem auch nach der Herstellung der Verbindung, visuell nachprüfbar zu machen.

Ausgehend von der bekannten Vorrichtung wird diese Aufgabe erfindungsgemäß durch die Kombination folgender Merkmale gelöst:

1. Die Vorrichtung weist einen nach oben öffenen, sich über ihre gesamte Länge erstreckenden Fasereinführkanal auf, der ein Einlegen der Faserenden senkrecht zum Faser- bzw. Rinnenverlauf gestattet,

2. der Scheitel der Rinne ist seitlich im Verbinderkörper angeordnet, so daß die Halbierende des Scheitelwinkels etwa rechtwinklig zur Einlegeebene der Faserenden gemäß Merkmal 1 verläuft,

3. für jedes Faserende sind zwei Spannelemente vorgesehen, von denen das eine in unmittelbarer Nähe der Faserstirnfläche und das andere in einem weiter zurückliegenden Bereich des Faserendes angeordnet ist, wobei das eine Spannelement den stirnflächennahen Bereich der Faserenden in die Rinne und das andere Spannelement den weiter zurückliegenden Bereich der Faserenden gegen ein Widerlager drückt,

4. die die Faserenden in die Rinne drückenden Spannelemente sind so ausgebildet, daß der seitlich aus der Rinne vorstehende Bereich jedes Faserendes von diesen Spannelementen nicht überdeckt wird und deshalb von außen sichtbar ist,

5. für jedes Faserende ist mindestens ein Betätigungsglied vorgesehen, um die beiden jedem Faserende zugeordneten Spannelemente zu beaufschlagen.

Das Einlegen der Federenden senkrecht zum Faser- bzw. Rinnenverlauf vermeidet den Nachteil, daß Schmutzteilchen vor der Faserstirnfläche hergeschoben und zur Verbindungsstelle befördert werden; außerdem bleibt des Faserende bei dieser Art des Einlegens während des gesamten Einlegevorgangs sichtbar. Aufgrund der seitlichen Anordnung des Scheitels der Rinne und des etwa rechtwinkligen Verlaufs der Halbierenden des Scheitelwinkels zur Ebene der anfänglichen Bewegung der Faserenden muß der letzte Abschnitt des Einlegevorgangs durch eine Horizontalbewegung bewirkt werden, wodurch - anders als beim von oben erfolgenden Einlegen in eine V-Nut - ein etwaiger Achsversatz von oben sichtbar wird, da ja die Tiefe der Rinne kleiner als der Durchmesser der Faserenden ist. Die Verwendung zweier im Abstand voneinander angeordneter Spannelemente schafft eine jederzeit einwandfreie Feinklemmung im stirnflächennahen Bereich sowie eine zuverlässige Grobklemmung und Zugentlastung im stirnflächenfernen Bereich, wobei die Beaufschlagung jedes Faserendes durch eigene Spannelemente sicherstellt, daß auch zwei Faserenden unterschiedlichen Durchmessers sicher geklemmt werden. Schließlich gewährleistet die Beaufschlagung beider Spannelemente durch ein einziges Betätigungsglied, daß bei dessen Bedienung auch wirklich beide Spannvorgänge durchgeführt werden.

In weiterer Ausgestaltung der Erfindung ist vorgesehen, daß die vier Spannelemente als zwei zweiarmige Blettfedern ausgebildet sind, deren einer Arm in der einen Hälfte und deren anderer Arm in der anderen Hälfte der Vorrichtung angeordnet ist, so daß der Spanndruck auf beiden Seiten der Verbindung für die stirnflächennahe Blattfeder einerseits und für die stirnflächenferne Blattfeder andererseits konstant ist. Diese baulich recht einfache Lösung wirkt aufgrund der Konstanz des Spanndrucks vor allem einem Achsversatz, wie er bei unterschiedlichen Spanndrücken durch verschieden tiefes Hineindrücken des Faserendes in die V-Nut begünstigt wird, entgegen.

Gemäß einem weiteren bevorzugten Merkmal der Erfindung sind die Blattfedern mit Ansätzen versehen, welche in der Ruhestellung die Rinne und den sich daran anschließenden Faserkanal sperren, wobei diese Ansätze nur durch Beaufschlagung der Betätigungsglieder aus der Rinne und dem sich daran anschließenden Faserkanal herausbewegbar sind. Die Faserenden lassen sich also lediglich dann einlegen, wenn die Spannelemente gespannt und so sichergestellt ist, daß diese Elemente auch wirksam werden können.

Diese Tendenz wird erfindungsgemäß noch dadurch verstärkt, daß die Ansätze der Blattfedern nach dem Einlegen des Faserendes und nach Aufhören der Beaufschlagung der Betätigungsglieder unter der Wirkung der Blattfedern selbsttätig in die Spannstellung einrücken. Da die Bedienungsperson oder -vorrichtung die Betätigungsglieder irgendwann einmal loslassen muß, um den nächsten Verbindungsvorgang durchzuführen, ist also eine Spannautomatik gegeben, wobei durch entsprechende Auslegung der Federwege für die stirnflächennahe und die stirnflächenferne Verspannung Gleichzeitigkeit oder zeitliche Aufeinanderfolge vorgesehen sein kann.

In der Zeichnung ist ein bevorzugtes Ausführungsbeispiel der Erfindung dargestellt. Es zeigen

Fig. 1 eine Draufsicht auf eine in der Ruhestellung befindliche erfindungsgemäße Vorrichtung ohne eingelegte Faserenden,

Fig. 2 eine Draufsicht auf eine in der Bereitstellung befindliche erfindungsgemäße Vorrichtung unmittelbar vor dem Einlegen des linken Faserendes,

Fig. 3 eine Draufsicht auf eine in der Betriebsstellung befindliche erfindungsgemäße Vorrichtung mit beidseitig eingelegten und verspannten Faserenden sowie

Fig. 4 eine - vergrößert dargestellte - Seitenansicht der V-förmigen Rinne mit eingelegtem und gespanntem Faserende in vergrößerter Darstellung.

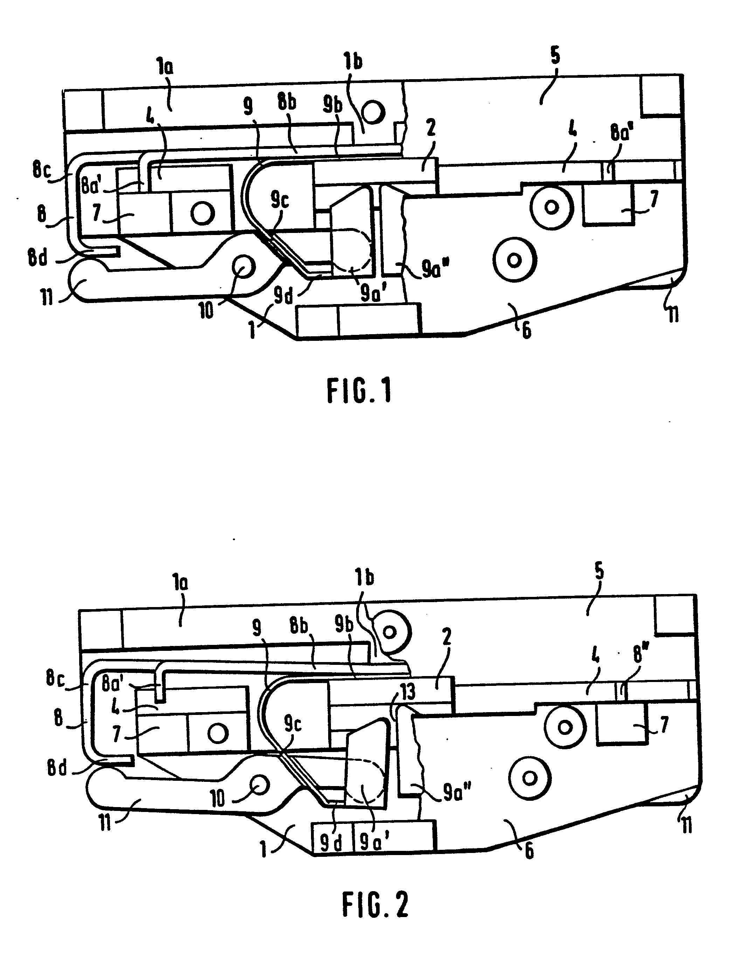

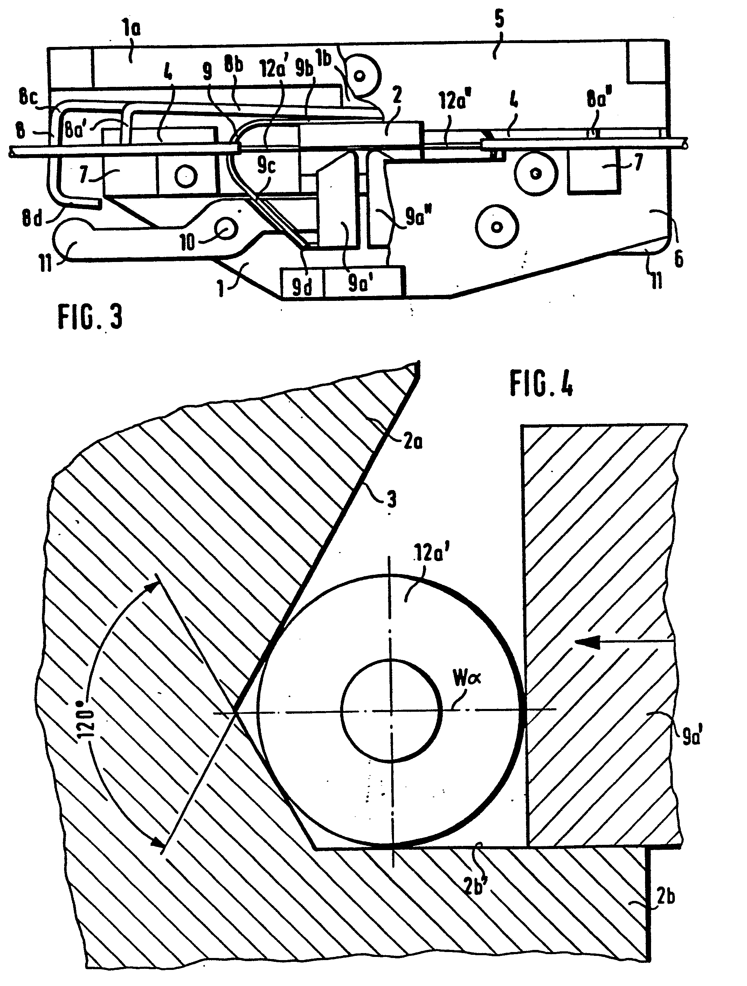

In den Fig. 1 - 3 ist die linke Hälfte der oberen Abdeckung weggebrochen worden, um die darunter liegenden Teile sichtbar zu machen; die rechte Hälfte enthält die gleichen Teile in gleicher Anordnung, so daß in der Ruhe- und Betriebsstellung gemäß Fig. 1 und 3 Axialsymmetrie gegeben ist.

Auf einer unteren Abdeckung 1 ist mittig ein Verbinderkörper 2 befestigt, der sich gleichmäßig in die rechte und in die linke Hälfte der Vorrichtung erstreckt. Der Verbinderkörper 2 stellt im wesentlichen ein 90°-Winkelstück dar, in dessen aufrechtstehenden Schenkel 2a unmittelbar über dem Winkelstück-Scheitel eine sich horizontal erstreckende V-förmige Rinne 3 eingearbeitet ist (s. Fig. 4). Der bei dem gezeigten Ausführungsbeispiel 120° betragende Scheitelwinkel der Rinne 3 ist seitlich angeordnet derart, daß seine Winkelhalbierende Wα horizontal bzw. parallel zu der Oberfläche 2b' des horizontalen Schenkels 2b verläuft.

Wie die mit der oberen Abdeckung versehenen rechten Hälften der Vorrichtung erkennen lassen, schließt am Ende des Verbinderkörpers 2 an die Rinne 3 ein deren Richtung folgender Faserkanal 4 an. Dieser Faserkanal 4 ist wie die Rinne 3 von oben her zugänglich, weil die obere Abdeckung aus zwei Teilen besteht, nämlich einem Steg 5 und einer Platte 6, die zwischen sich einen Abstand belassen. Mit 7 ist ein den Faserkanal 4 seitlich begrenzendes Widerlager bezeichnet.

Gegen dieses Widerlager 7 liegt in der Ruhestellung gemäß Fig. 1 ein Ansatz 8a' einer zweiarmigen Blattfeder 8 an, so daß der Faserkanal 4 gesperrt ist. Die Blattfeder 8 ist mittels ihres Grundstegs 8b auf einem Vorsprung 1b einer rechtwinkligen Abbiegung 1a der unteren Abdeckung 1 gelagert der Grundsteg 8b weist an beiden Seiten der Vorrichtung eine rechtwinklige Abbiegung 8c auf, von der in der Zeichnung nur die linke sichtbar ist, die sich - wiederum unter rechtwinkliger Umbiegung - in das freie Federende 8d fortsetzt.

Zwischen der Außenseite des aufrechtstehenden Schenkels 2a des Verbinderkörpers 2 und dem Grundsteg 8b der Blattfeder 8 ist der Grundsteg 9b einer ebenfalls zweiarmigen Blattfeder 9 gehalten. Der Grundsteg 9b ist neben dem Verbinderkörper 2 abgebogen derart, daß die Abbiegung 9c unterhalb des Faserkanals 4 hindurch bis in eine Stellung verläuft, in der sich das freie Federende 9d parallel zur Rinne 3 befindet. An jedem der beiden Federenden 9d ist ein Ansatz 9a' bzw. 9a" befestigt, der in der Ruhestellung gemäß Fig. 1 gegen die Rinne 3 vorsteht und diese sperrt.

Gegen die freien Federenden 8d und 9d liegt ein bei 10 schwenkbeweglich gelagertes, nach Art eines Doppelhebels ausgebildetes Betätigungsglied 11 an. Bei einer im Uhrzeigersinn erfolgenden Verschwenkung dieses Betätigungsglieds 11 werden beide Blattfedern 8 und 9 im Spannsinn beaufschlagt, wobei diese Beaufschlagung bei dem dargestellten Ausführungsbeispiel gleichzeitig einsetzt; es wird die in Fig. 2 dargestellte Bereitstellung herbeigeführt, in der die Rinne 3 und der Faserkanal 4 frei zugänglich sind.

Die Wirkungsweise der erfindungsgemäßen Vorrichtung ist folgende:

Der Bedienungsperson liegt die Vorrichtung zunächst in der Ruhestellung gemäß Fig. 1 vor, in welcher die Rinne 3 und der Faserkanal 4 durch die Ansätze 9a' bzw. 9a" und 8a' bzw. 8a" gesperrt sind. Um das Faserende 12a' überhaupt einlegen zu können, muß die Bedienungsperson das in der Zeichnung linke Betätigungsglied 11 im Uhrzeigersinn verschwenken und in dieser in Fig. 2 veranschaulichten Stellung halten, da nur dann die Rinne 3 und der Faserkanal 4 zugänglich bleiben.

Sodann wird das Faserende 12a' von oben, also quer zur Faserverlaufsrichtung, vor dem aufrechtstehenden Schenkel 2a des Verbinderkörpers 2 vorbei bis zur Auflage auf der Oberfläche 2b' von dessen horizontalem Schenkel 2b und zugleich in den Faserkanal 4 zwischen das Widerlager 7 und die Stirnseite des Ansatzes 8a' der Blattfeder 8 herunterbewegt, wobei die der linken Hälfte zugewandte Seite 13 des Ansatzes 9a" der Blattfeder 9 eine Anschlag- bzw. Kontrollfläche für das Faserende 12a' bildet. In dieser Stellung ist das Faserende 12a' noch voll sichtbar.

Läßt die Bedienungsperson nun das Betätigungsglied 11 los, haben die Blattfedern 8 und 9 das Bestreben, wieder in die Ruhestellung gemäß Fig. 1 zurückzukehren. Das ist jedoch nicht möglich, weil ihre Ansätze 8a' und 9a' im Zuge der Rückstellbewegung gegen das Faserende 12a' zur Anlage kommen und dieses gegen das Widerlager 7 (Grobklemmung und Zugentlastung) an- bzw. in die Rinne 3 hineindrücken (Feinklemmung); durch Loslassen des Betätigungsglieds 11 erfolgt also automatisch die Verspannung des Faserendes 12a' in der linken Hälfte der Verbindung.

Danach wird das Faserende 12a" in der rechten Hälfte in gleicher Weise eingelegt und verspannt, womit die in Fig. 3 gezeigte Betriebsstellung, d.h. also die fertige Verbindung, vorliegt. In dieser Betriebsstellung ist der Bereich, in dem sich die Stirnflächen der beiden Faserenden 12a' und 12a" gegenüberliegen, noch teilweise sichtbar (s. Fig. 3 und 4), so daß - ggf. unter Zuhilfenahme eines vergrößernden optischen Geräts - feststellbar ist, ob ein Achsversatz, zu großer Abstand der Faserstirnflächen, Fehl- bzw. Kippwinkel und/oder eine Verschmutzung des Verbindungsbereichs vorliegt. Auch läßt sich, da während des ganzen Verbindungsvorgangs das gesamte Faserende sichtbar ist, eine etwa erst bei dessen Einführen erfolgende Beschädigung erkennen, was bei den bekannten Bauarten, bei denen das Faserende beim Einführen in den Verbindungsbereich verdeckt ist, nicht möglich ist.

Abschließend sei noch auf die konstruktiv recht elegante und doch einfache Ausgestaltung der Vorrichtung hingewiesen, die ein sehr klein bauendes einstückiges Bauteil darstellt. Die Bedienung des Betätigungsglieds 11 kann auch durch eine Vorrichtung erfolgen, so daß die Bedienungsperson nur noch das Einlegen der Faserenden und die Überprüfung der Ordnungsgemäßheit der Verbindung vorzunehmen braucht.

## Patentansprüche

1. Vorrichtung zum lösbaren Verbinden von zwei Lichtwellenleiterfasern durch Einlegen der Faserenden (12a', 12a") in eine V-förmige Rinne (3) eines Verbinderkörpers (2) und anschließendes Verspannen der Faserenden durch wenigstens ein diese in die Rinne drückendes federelastisches Spannelement (9a', 9a"), wobei die Tiefe der Rinne (3) kleiner als der Durchmesser der Faserenden ist, gekennzeichnet durch die Kombination folgender Merkmale:
- 1. Die Vorrichtung weist einen nach oben offenen, sich über ihre gesamte Lange erstreckenden Fasereinführkanal (4) auf, der ein Einlegen der Faserenden (12a', 12a") senkrecht zum Faser- bzw. Rinnenverlauf gestattet,
- 2. der Scheitel der Rinne (3) ist seitlich im Verbinderkörper (2) angeordnet, so daß die Halbierende (Wα) des Scheitelwinkels etwa rechtwinklig zur Einlegeebene der Faserenden (12a', 12a") gemäß Merkmal 1 verläuft,
- 3. für jedes Faserende (12a' bzw. 12a") sind zwei Spannelemente (8a', 9a'; 8a", 9a") vorgesehen, von denen das eine (9a', 9a") in unmittelbarer Nähe der Faserstirnfläche und das andere (8a', 8a") in einem weiter zurückliegenden Bereich des Faserendes (12a' bzw. 12a") angeordnet ist, wobei das eine Spannelement (9a', 9a") den stirnflächennahen Bereich der Faserenden in die Rinne (3) und des andere Spannelement (8a', 8a") den weiter zurückliegenden Bereich der Faserenden gegen ein Widerlager (7) drückt,
- 4. die die Faserenden (12a', 12a") in die Rinne (3) drückenden Spannelemente (9a', 9a") sind so ausgebildet, daß der seitlich aus der Rinne (3) vorstehende Bereich jedes Faserendes (12a' bzw. 12a") von diesen Spannelementen nicht überdeckt wird und deshalb von außen sichtbar ist,
- 5. für jedes Faserende (12a', 12a") ist mindestens ein Betätigungsglied (11) vorgesehen, um die beiden jedem Faserende zugeordneten Spannelemente zu beaufschlagen.

2. Vorrichtung nach Anspruch 1, dadurch gekennzeichnet, daß die vier Spannelemente als zwei zweiarmige Blattfedern (8, 9) ausgebildet sind, deren einer Arm in der einen Hälfte und deren anderer Arm in der anderen Hälfte der Vorrichtung angeordnet ist, so daß der Spanndruck auf beiden Seiten der Verbindung für die stirnflächennahe Blattfeder (9) einerseits und für die stirnflächenferne Blattfeder (8) andererseits konstant ist.

3. Vorrichtung nach Anspruch 2, dadurch gekennzeichnet, daß die Blattfedern (8, 9) mit Ansätzen (8a', 8a" bzw. 9a', 9a") versehen sind, welche in der Ruhestellung die Rinne (3) und den sich daran anschließenden Faserkanal (4) sperren.

4. Vorrichtung nach Anspruch 3, dadurch gekennzeichnet, daß die Ansätze (8a', 8a" bzw. 9a', 9a") der Blattfedern (8, 9) durch Beaufschlagung der Betätigungsglieder (11) aus der Rinne (3) und dem sich daran anschließenden Faserkanal (4) herausbewegbar sind.

5. Vorrichtung nach Anspruch 4, dadurch gekennzeichnet, daß die Ansätze (8a', 8a" bzw. 9a', 9a") der Blattfedern (8, 9) nach dem Einlegen des Faserendes (12a' bzw. 12a") und nach Aufhören der Beaufschlagung der Betätigungsglieder (11) unter der Wirkung der Blattfedern (8, 9) selbsttätig in die Spannstellung einrücken.

6. Vorrichtung nach Anspruch 5, dadurch gekennzeichnet, daß durch entsprechende Auslegung der Federwege für die stirnflächennahe und die stirnflächenferne Verspannung Gleichzeitigkeit oder zeitliche Aufeinanderfolge vorgesehen ist.

7. Vorrichtung nach den Ansprüchen 3 - 6, dadurch gekennzeichnet, daß einer der Ansätze (9a' bzw. 9a") für die stirnflächennahe Verspannung auf seiner der anderen Verbindungshälfte zugewandten Seite (13) eine Anschlagfläche für das in dieser anderen Hälfte anzuordnende Faserende (12a" bzw. 12a') bildet.

8. Vorrichtung nach Anspruch 1 und mindestens einem der folgenden, dadurch gekennzeichnet, daß der Scheitelwinkel der Rinne (3) 120° beträgt.

9. Vorrichtung nach Anspruch 1 und mindestens einem der folgenden, dadurch gekennzeichnet, daß die Tiefe der Rinne (3) größer als der Radius der Faserenden (12a' bzw. 12a") ist.

## Claims

1. A device for the detachable connection of light wave fibres by inserting the fibre ends (12a', 12a") in a V-shaped groove (3) of a connector body (2) and subsequent clamping of the fibre ends by at least one clamping resilient element (9a', 9a") pressing into the groove, the depth of the groove (3) being smaller than the diameter of the fibre ends, characterised by the combination of the following features:
- 1. The device has a fibre insertion channel (4) which is open at the top and extends over its full length, and which permits the fibre ends (12a', 12a") to be inserted perpendicular to the run of the fibre or groove,
- 2. the crown of the groove (3) is arranged laterally in the connector body (2), so that the bisectrix (Wα) of the vertical angle extends approximately perpendicular to the insertion plane of the fibre ends (12a', 12a") in accordance with feature 1.
- 3. for each fibre end (12a' or 12a") two clamping elements (8', 9a'; 8a", 9a") are provided, of which one (9a', 9a") is arranged in the direct vicinity of the fibre end face and the other (8a', 8a") in the region of the fibre end (12a' or 12a") lying further back, one clamping element (9a', 9a") pressing the region of the fibre ends which is near the end face into the groove (3) and clamping element (8a', 8a") pressing the region of the fibre ends which lies further back against an abutment (7).
- 4. the clamping elements (9a', 9a") which press the fibre ends (12a', 12a") into the groove (3) are formed so that the region of each fibre end (12a' or 12a") projecting laterally from the groove is not covered by these clamping elements and is therefore visible from outside.
- 5. for each fibre end (12a', 12a") at least one actuating member (11) is provided, so as to act upon the two clamping elements associated with each fibre end.

2. A device according to claim 1, characterised in that the four clamping elements are formed as two two-armed flat springs (8, 9), one arm of which is arranged in one half of the device and the other arm of which is arranged in the other half of the device, so that the clamping pressure on both sides of the connection for the flat spring (9) near the end face on the one hand and for the flat spring (8) remote from the end face on the other hand is constant.

3. A device according to claim 2, characterised in that the flat springs (8, 9) are provided with projections (8a', 8a" or 9a', 9a"), which in the rest position block the groove (3) and the adjacent fibre channel (4),

4. A device according to claim 3, characterised in that the projections (8a', 8a" or 9a', 9a") of the flat springs (8, 9) can be moved out of the groove (3) and the adjacent fibre channel (4) by the actuating members being acted upon (11).

5. A device according to claim 4, characterised in that the projections (8a', 8a" or 9a', 9a") of the flat springs (8, 9) after the fibre ends (12a' or 12a") have been inserted and after the actuating members (11) have ceased to act under the effect of the flat springs (8, 9) engage automatically in the clamping position.

6. A device according to claim 5, characterised in that by suitably setting the spring excursion for clamping close to the end face or remote from it, synchronisation or a chronological sequence is provided.

7. A device according to claims 3 to 6, characterised in that one of the projections (9a' or 9a") for clamping close to the end face on its side (13) associated with the other connection half forms an abutment face for the fibre end (12a' or 12a") to be arranged in this other half.

8. A device according to claim 1 and at least one of the following claims, characterised in that the vertical angle of the groove (3) is 120°.

9. A device according to claim 1 and at least

**0 085 825**

one of the following claims, characterised in that the depth of the groove (3) is greater than the radius of the fibre ends (12a' or 12 a").

## Revendications

1. Dispositif pour la connexion amovible de deux fibres conductrices de lumière par insertion des extrémités des fibres (12a', 12a") dans une rainure (3) en V d'un corps de connecteur (2) et serrage subséquent des extrémités des fibres par au moins un élément de serrage (9a', 9a") élastiqué, poussant les extrémités des fibres dans la rainure, la profondeur de la rainure (3) étant inférieure au diamètre des extrémités des fibres, caractérisé par la combinaison des caractéristiques suivantes:

- 1. Le dispositif présente un canal d'introduction de fibres (4) ouvert vers le haut, s'étendant sur toute la longueur du dispositif, ce canal permettant l'insertion des extrémités des fibres (12a', 12a") perpendiculairement à l'orientation des fibres ou de la rainure,

- 2. Le sommet de la rainure (3) est disposé latéralement dans le corps de connecteur (2), de façon que la bissectrice (Wα) de l'angle au sommet s'étende à peu près perpendiculairement au plan d'insertion des extrémités des fibres (12a', 12a") selon la revendication 1,

- 3. Pour chaque extrémité de fibre (12a' ou 12a") sont prévus deux éléments de serrage (8a', 9a'; 8a", 9a") dont l'un (9a', 9a") est disposé à proximité immédiate de la face frontale de la fibre, et l'autre (8a', 8a") dans une zone en retrait de l'extrémité de la fibre (12a' ou 12a"), l'un des éléments de serrage (9a', 9a") poussant la zone proche de la face frontale des extrémités des fibres dans la rainure (3) et l'autre élément de serrage (8a', 8a") poussant la zone en retrait des extrémités des fibres contre une butée (7),

- 4. Les éléments de serrage (9a', 9a") poussant les extrémités des fibres (12a', 12a") dans la rainure (3) sont réalisés de manière que la zone de chaque extrémité de fibre (12a' ou 12a"), faisant saillie latéralement hors de la rainure (3), ne se trouve pas recouverte par ces éléments de serrage et est donc visible de l'extérieur, et

- 5. Pour chaque extrémité de fibre (12a', 12a") est prévu au moins un organe d'actionnement (11) pour solliciter les deux éléments de serrage associés à chaque extrémité de fibre.

2. Dispositif suivant la revendication 1, caractérisé par le fait que les quatre éléments de serrage sont réalisés sous la forme de deux lames de ressort (8, 9) à deux bras dont un bras est disposé dans une moitié et l'autre bras dans l'autre moitié du dispositif, de sorte que la pression de serrage sur les deux côtés de la connexion pour la lame de ressort (9) proche de l'extrémité frontale, d'une part, et pour la lame de ressort (8) éloignée de la face frontale, d'autre part, est constante.

3. Dispositif suivant la revendication 2, caractérisé par le fait que les lames de ressort (8, 9) sont pourvues de saillies (8a', 8a" ou 9a', 9a") qui, en position de repos, bloquent la rainure (3) et le canal de fibres (4) qui s'y raccorde.

4. Dispositif suivant la revendication 3, caractérisé par le fait que les saillies (8a', 8a" ou 9a', 9a") des lames de ressort (8, 9) peuvent être déplacées, par sollicitation des organes d'actionnement (11), hors de la rainure (3) et du canal de fibres (4) qui s'y raccorde.

5. Dispositif suivant la revendication 4, caractérisé par le fait que les saillies (8a', 8a" ou 9a', 9a") des lames de ressort (8, 9) sont amenées, après insertion de l'extrémité de fibre (12a' ou 12a") et après cessation de la sollicitation des organes d"actionnement (11), automatiquement en position de serrage sous l'action des lames de ressort (8, 9).

6. Dispositif suivant la revendication 5, caractérisé par le fait que par une conception appropriée des courses élastiques, le serrage à proximité de l'extrémité frontale et le serrage éloigné de l'extrémité frontale ont lieu simultanément ou successivement dans le temps.

7. Dispositif suivant les revendications 3 à 6, caractérisé par le fait que l'une des saillies (9a' ou 9a") pour le serrage à proximité de la face frontale forme, sur son côté (13) tourné vers l'autre moitié de connexion, une surface de butée pour l'extrémité de fibre (12a" ou 12a') devant être disposée dans cette moitié.

8. Dispositif suivant la revendication 1 et au moins l'une des revendications suivantes, caractérisé par le fait que l'angle au sommet de la rainure (3) élève à 120°.

9. Dispositif suivant la revendication 1 et au moins l'une des revendications suivantes, caractérisé par le fait que la profondeur de la rainure (3) est supérieure au rayon des extrémités des fibres (12a' ou 12a").

FIG.1

FIG.2

FIG. 3

FIG. 4